(19) Europäisches Patentamt
European Patent Office
Office européen des brevets

(11) **EP 2 292 376 B1**

(12) **EUROPÄISCHE PATENTSCHRIFT**

(45) Veröffentlichungstag und Bekanntmachung des Hinweises auf die Patenterteilung:
**09.05.2012 Patentblatt 2012/19**

(51) Int Cl.:
**B23Q 11/00** *(2006.01)*   **F16D 51/20** *(2006.01)*
**F16P 7/00** *(2006.01)*   **B23Q 17/00** *(2006.01)*

(21) Anmeldenummer: **10169329.9**

(22) Anmeldetag: **13.07.2010**

(54) **Notbremssystem für Werkzeugmaschinen, Werkzeugmaschine damit und Verfahren zum Betreiben dieser Werkzeugmaschine**

Emergency brake system for machine tools, machine tool therewith and method for operating such a machine tool

Système de freinage d'urgence pour machines-outils, machine outil le comprenant et procédé d'utilisation de cette machine-outil.

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **02.09.2009 DE 102009029090**

(43) Veröffentlichungstag der Anmeldung:
**09.03.2011 Patentblatt 2011/10**

(73) Patentinhaber: **Robert Bosch GmbH**
**70442 Stuttgart (DE)**

(72) Erfinder: **Winkler, Thomas**
**70439 Stuttgart (DE)**

(56) Entgegenhaltungen:
**GB-A- 1 351 546   GB-A- 1 536 595**
**US-A- 4 258 832**

**Beschreibung**

Stand der Technik

Die vorliegende Erfindung betrifft ein Schutzsystem, insbesondere ein Notbremssystem für eine Werkzeugmaschine, insbesondere für eine Kreissäge, das seine Schutzwirkung innerhalb einer sehr geringen Zeitspanne, die gewöhnlich im Bereich einiger Millisekunden (typischerweise 1 bis 50 ms) liegt, entfaltet, um einen Benutzer der Werkzeugmaschine in Gefahrensituationen vor Verletzungen zu schützen.

Derzeit existieren im Wesentlichen drei verschiedene Ansätze zur Realisierung eines solchen Schutzsystems für Tisch- und Format-Kreissägen, das verhindern soll, dass ein Benutzer mit dem umlaufenden Sägeblatt in Kontakt kommt oder eine folgenschwere Schnittverletzung davonträgt.

Bei dem unter dem Firmennamen Saw Stop Inc. geführten und vertriebenen Schutzsystem eines amerikanischen Herstellers handelt es sich um ein Notbremssystem, das ein Abbremsen der Werkzeugmaschine aufgrund eines direkten Eingriffes einer Brems-Aktorik mit dem Sägeblatt ermöglicht, sobald ein entsprechend gestalteter Sensor eine Gefahrensituation detektiert hat. Hierbei wird durch den Einsatz eines Hitzdrahtauslösers ein drehbar angeordneter Aluminiumblock mit Hilfe einer vorgespannten Feder in die Verzahnung des laufenden Sägeblattes gestoßen, welcher sich darin verkeilt und auf diese Weise die Rotationsenergie aller während des Sägevorgangs umlaufenden Geometrien der Werkzeugmaschine absorbiert. Als Nebeneffekt wird dieser einseitige Kraftangriff auf die Schneiden dazu genutzt, das Sägeblatt durch eine konstruktiv speziell ausgeführte Aufhängung, die am Sägetisch angeordnet ist, in den Sägetisch zu versenken. Mit Hilfe dieser Anordnung ist man dazu in der Lage, folgenschwere körperliche Schäden von dem den Schutzmechanismus auslösenden Bediener der Werkzeugmaschine abzuwenden. Nachteilig ist hierbei der direkte Angriff auf das Bearbeitungswerkzeug, also auf die Schneidengeometrie des Sägeblattes, da durch Ausbrechen von Teilen der Verzahnung zusätzliches Gefahrenpotential für den Bediener entsteht. Des Weiteren ist zur Wiederherstellung der Bereitschaft des Schutzsystems ein Austausch der Bremseinheit inklusive des Sägeblattes durch eine einsatzbereite Ersatzeinheit erforderlich, die der Bediener bevorraten muss, um nach erfolgtem Bremsvorgang unter Inanspruchnahme der Schutzfunktion weiterarbeiten zu können. Dies ist mit erheblichen Folgekosten und entsprechendem Zeitaufwand für die Beschaffung und Installierung verbunden. Zudem kann davon ausgegangen werden, dass alle vom Bremsvorgang betroffenen Bauteile, d.h. alle umlaufenden Geometrien der Werkzeugmaschine, starken Beanspruchungen während der Verzögerungsphase ausgesetzt werden. Weder der Hersteller noch entsprechende Veröffentlichungen zu diesem System weisen Daten bezüglich der Dauerfestigkeit der Anlage aus.

Ein weiterer Ansatz verfolgt die Verwendung eines Schutzsystems zur ausschließlichen Absenkung des Sägeblattes im Sägetisch, ohne einen Bremsvorgang des Sägeblattes einzuleiten. Mit Hilfe eines pyrotechnischen Zündsatzes wird hierbei das Sägeblatt inklusive der Hauptwelle und deren Lagerung aus der Gefahrenzone entfernt, so dass schwerwiegende Verletzungen des Bedieners verhindert werden können. Nachteilig an dieser Schutzsystemart ist die Notwendigkeit der Bewegung relativ großer Massen in Form der abzusenkenden Anordnungen unter strengen Zeitvorgaben im Millisekundenbereich. Die hierdurch notwendigen pyrotechnischen Zünder, welche sich für diese Schutz-Aktorik als unerlässlich erweisen, rufen ferner eine teure Teilreversibilität hervor, welche ein sofortiges Weiterarbeiten an der Werkzeugmaschine mit einem einsatzbereiten Schutzsystem sowohl zeitlich als auch organisatorisch einschränken. Weiterhin eignet sich dieses Schutzsystem aus Gründen begrenzten Bauraumes und sehr spezifischer Verfahrensweise nur für größere stationäre Geräte, wie beispielsweise Tischkreissägen, die einen solchen Aufbau in ihrem Innern ermöglichen. Für die Anwendung an kleineren handgeführten Geräten, wie beispielsweise Kapp- und Gehrungssägen oder Paneelsägen, scheidet dieses System hingegen aus.

Eine Offenlegung aus einem öffentlich geförderten Projekt namens "Cut-Stop" (VDI/VDE/IT) zu einem Schutzsystem für Formatkreissägen vom Institut für Werkzeugmaschinen (IFW) der Universität Stuttgart beschreibt einen Ansatz, welcher mittels einer Sonderform einer Scheibenbremsanlage, nämlich einer selbstverstärkenden Keilbremse, die Hauptwelle der Werkzeugmaschine und somit das Sägeblatt zum Stillstand bringt. Hierbei wird mit Hilfe eines pyrotechnischen Zünders ein Keil beschleunigt und anschließend zwischen eine feststehende Keilführung in Form eines modifizierten Bremssattels und die rotierende Bremsscheibe gestoßen. Für die Auswahl und Kombination spezifischer Keilwinkel $\alpha$ und Bremsbelagwerte $\mu$ wirkt die Anordnung selbsthemmend, so dass mit diesem Aufbau in Abhängigkeit der zu verzögernden Massenträgheit die jeweiligen zeitlichen Anforderungen an dem Bremsvorgang erfüllt werden können. Der Nachteil dieses Schutzsystems liegt jedoch darin, dass auch hierbei, wie es in der genannten Veröffentlichung beschrieben wird, im Anschluss an die Auslösung der Schutz-Aktorik ein Austausch der kompletten Bremseinheit aufgrund des sich in der Reibpaarung verklemmenden Keils erforderlich ist. Der benötigte zeitliche Aufwand des durchzuführenden Arbeitsumfangs beläuft sich hierbei auf ca. 10-12 Minuten für die vollständige Wiederherstellung der Systembereitschaft. Somit gilt auch hier eine teilweise Einschränkung der unverzüglichen Systemreversibilität.

Aus der DE 195 36 995 A1 ist eine Sicherheitsbremse für Aufzüge bekannt, die eine Einrichtung aufweist, die bei Überschreiten einer vorgegebenen Höchstgeschwindigkeit des Transportmittels den Antrieb mit einer geschwindigkeitsabhängigen Verzögerung abbremst Und ggfls. auch anhält. Die Sicherheitsbremse der DE 195 36 995 A1 wirkt drehzahlabhängig unmittelbar auf die Treibscheibe der seilbetriebenen Förderanlage und vermag deren Drehgeschwindigkeit zu begrenzen. Die als Fliehkraftbremse ausgebildete Sicherheitsbremse weist zusätzlich eine Einrichtung zum Verstärken der Bremskraft in Abhängigkeit von der Fördergeschwindigkeit auf.

Die GB 1 351 546 offenbart ein Sicherheitssystem für ein Elektrowerkzeug, Insbesondere eine benzinbetriebene Kettensäge. Bei dem System der GB 1 351 546 wird die Kette über einen fest mit einer Kupplungstrommel einer Fliehkraftkupplung verbundenen Kettentrieb betrieben. Die Kupplungstrommel der Fliehkraftkupplung sitzt mittels eines Nadellagers beweglich auf der Motorwelle der Maschine. Oberhalb einer gewissen Motordrehzahl (genannt sind beispielhafte 3500 rmp) greifen radial bewegliche Kupplungsschuhe einer ebenfalls beweglich auf der Antriebswelle gelagerten Kupplungsscheibe der Fliehkraftkupplung in die Bremstrommel ein und erzeugen so eine Wirkverbindung zwischen der Kupplungsscheibe und der Kupplungstrommel der Fliehkraftkupplung. Da sowohl die Kupplungsscheibe als auch die Kupplungstrommel der Fliehkraftkupplung über Nadellager gegenüber der Antriebswelle entkoppelt sind, kann durch die reine Verkupplung von Kupplungsscheibe und Kupplungstrommel der Fliehkraftkupplung noch keine Rotationsenergie der Antriebwelle auf den Kettentrieb gegeben werden. Die Verkopplung der Antriebswelle mit dem Kettentrieb erfolgt über eine der Fliehkraftkupplung vorgeschaltete Sicherheitskupplung. Diese Sicherheitskupplung wird mittels eines über einen Elektromagneten aktivierten Schwenkarms aktiviert bzw. deaktiviert. Ist ein Sicherheitsschalter ("Tot-Mann-Schalter") an der Maschine von einem Anwender aktiviert, so wird der Elektromagnet bestromt und der Schwenkarm der Sicherheitskupplung aktiviert. In diesem Fall wird eine Wirkverbindung zwischen der Sicherheitskupplung und der Kupplungsscheibe der Fliehkraftbremse einerseits und der Sicherheitskupplung und der Kupplungstrommel der Fliehkraftkupplung andererseits erzeugt. Übersteigt die Drehzahl den kritischen Wert (genannt sind beispielhafte 3500 rmp) so wird mittel der Fliehkraftkupplung eine Wirkverbindung zwischen der Kupplungstrommel und der Kupplungsscheibe und damit zwischen der Sicherheits kupplung und dem Kettentrieb erzeugt.

Aus der GB 1 536 595 ist ein dem System der GB 1 351 546 vergleichbares Sicherheitssystem für eine Handwerkzeugmaschine bekannt. Das System der GB 1 536 595 weist ebenfalls eine Fliehkraftkupplung auf, bei der ein Wirkeingriff zwischen der Kupplungstrommel und den Kupplungsschuhen zum Antrieb des Werkzeuges genutzt wird.

Aufgabe der Erfindung

Ausgehend von diesem Stand der Technik ist es eine Aufgabe der vorliegenden Erfindung, ein Schutzsystem einer Werkzeugmaschine, insbesondere ein reversibles Schutzsystem, mit einem Aufbau zu schaffen, welcher zuverlässig auslöst und seine Schutzwirkung innerhalb einiger Millisekunden entfaltet.

Offenbarung der Erfindung

Vorteile der Erfindung

Zur Lösung dieser Aufgabe schafft die vorliegende Erfindung ein Notbremssystem zum abrupten Abbremsen einer umlaufenden Welle einer Werkzeugmaschine, wobei das Notbremssystem eine Bremstrommel und zumindest eine Bremsbacke aufweist, die zum Abbremsen der Welle miteinander in Eingriff gebracht werden. Die Bremstrommel und die zumindest eine Bremsbacke sind in einem ersten Zustand durch eine Verriegelungsvorrichtung gesichert. Wird eine Gefahrensituation detektiert, wird mit einem entsprechenden Signal die Verriegelungsvorrichtung des Bremssystems gelöst, d.h. deaktiviert, so dass der Bremseingriff zwischen der Bremstrommel und der Bremsbacke unter dem Einfluss der aus der Rotation der Welle resultierenden Fliehkraft bzw. Fliehbeschleunigung erfolgen kann.

Eine Verriegelungseinrichtung ist zwischen einer verriegelten Stellung, in der die Bremsbacke an dem Bremsbackenträger gehalten wird, und einer entriegelten Stellung, in der die zumindest eine Bremsbacke derart freigegeben wird dass diese eine Schwenkbewegung in Richtung der Bremstrommel ausführt, verstellbar, um den Bremseingriff zu erzeugen. Mit anderen Worten wird die mit der umlaufenden Welle rotierende zumindest eine Bremsbacke unter Ausnutzung der Fliehkraft der umlaufenden Welle abrupt innerhalb weniger Millisekunden in Richtung der ortsfesten Bremstrommel bewegt, sobald die Verriegelungseinrichtung in ihre entriegelte Stellung überführt wird.

Erfindungsgemäß ist ein Diagnosesystem vorhanden, welches die Funktionstüchigkeit der Verrieglungsvorrichtung und insbesondere ihre Fähigkeit zur Freigabe der Bremsbacken prüft. Die Funktionen zur Diagnose des Systemzustandes des Bremssystems können beispielsweise mittels einer eigens hierfür vorgesehenen Elektronik in einer Diagnoseschaltung abgearbeitet werden. Entsprechend dem Ergebnis der Diagnose kann dann die Werkzeugmaschine freigegeben werden oder beispielsweise auch gesperrt werden.

Der zur Auslösung des Bremsfalles notwendige elektromagnetische Aktuator sollte aus technischen Gründen, insbesondere um schnellst mögliche Auslösezeiten im Bereich weniger Millisekunden zu erreichen, vorteilhaft als ein anziehender Magnet betrieben werden. Auf diese Weise ist es möglich, die Sperrbolzen der Bremsbacken über eine Ankerplatte im Akfivierungsfall der Aktuators sehr schnell aus den Bremsbacken heraus zu ziehen und somit die Bremsbacken frei zu geben.

Dass der Aktuator als ein anziehender Magnet ausgebildet ist, bedeutet also auch, dass dieser im Gefahrenfall elektrisch angesteuert werden muss, um die Ankerplatte anzuziehen und somit das System auszulösen. Um die Schutzfunktion des Notbremssystems sicher zu gewährleisten, ist daher eine Information darüber notwendig, ob sich der Aktuator, die Ansteuerleitungen, wie auch das gesamte Bremssystem im Bereitschaftszustand befinden, um ordnungsgemäß auf ein entsprechendes Signal zur Auslösung reagieren zu können.

Die Vorliegende Erfindung ist darauf ausgerichtet, das Bremssystem vor dem Einschalten, als auch während des Gerätebetriebes der Werkzeugmaschine mit Hilfe eines Diagnosesystems in vorgegebenen Intervallen anhand spezieller Kriterien zu überwachen und mittels hinterlegten Kenndaten auf dessen Systemzustand zu schließen. Ableitbare Maßnahmen können in Form der Verwehrung des Einschaltens der Werkzeugmaschine, die Einleitung einer vom System ausgelösten Notbremsung, Einblendungen von Meldungen auf einem Display oder dergleichen stattfinden.

In vorteilhafter Weise ist bei der erfindungsgemäßen Bremseinrichtung zur Betätigung der Bremse lediglich eine Ver- bzw. Entriegelungkraft aufzuwenden, da die für die Bremsleistung erforderliche Kraft durch Fliehkräfte des Systems erzeugt wird.

Da die Ver- bzw. Entriegelungskraft deutlich unter den benötigten Bremskräften liegt, kann die Verriegelung auch sehr schnell deaktiviert, d.h. gelöst werden. Dies führt - zusammen mit einer kurzen Bremszeit - zu der sehr kurzen Zeit im Millisekundenbereich (die typischerweise im Bereich von 1 bis 50 ms, vorteilhafterweise im Bereich von 1 bis 20 ms und insbesondere im Bereich von 10ms und weniger liegt), in dem das Bremssystem das Werkzeug einer Werkzeugmaschine abbremsen kann.

Die Verriegelungseinrichtung umfasst bevorzugt zumindest ein Sperrelement, das zwischen einer verriegelten Stellung, in der es mit der zumindest einen Bremsbacke in Eingriff ist, und einer entriegelten Stellung bewegbar ist, in der es von der Bremsbacke entkoppelt ist. Ein solches Sperrelement kann beispielsweise als Sperrbolzen oder dergleichen ausgebildet sein.

Die Verriegelungseinrichtung umfasst vorteilhaft einen Aktuator, der die Verriegelungseinrichtung aus der verriegelten Stellung in die entriegelte Stellung überführt. Bei diesem Aktuator kann es sich beispielsweise um einen Magnet-Aktuator handeln, der einen Ringanker zieht, an welchem ein Sperrelement in Form eines Sperrbolzens befestigt ist, um den Sperrbolzen aus der Bremsbacke auszurücken, so dass diese freigegeben wird.

Die vorliegende Erfindung ist darauf ausgerichtet, die beiden wesentlichen Komponenten der Verriegelungseinrichtung regelmäßig zu prüfen, um sicher zu stellen, dass diese in einem Bremsfall auch zuverlässig funktionieren würden. Dazu werden die Funktionsfähigkeit des Aktuators des Verriegelungssystems und auch die Position der Sperrbolzen der Verriegelungseinrichtung über die Diagnosemittel geprüft.

Funktionsfähig ist der vorliegende Aktuator im Zusammenspiel mit einem Anker, vorzugsweise als Ankerplatte ausgeführt, welche im Zeitpunkt des Auslösens angezogen wird. Der hierdurch entstehende allseitige Kraftangriff auf die Platte ermöglicht einen gleichmäßigen Zug ohne Querkräfte, so dass einem möglichen Kippen der Ankerplatte vorgebeugt wird. Darüber hinaus ermöglicht die Bestromung des Aktuators und die dadurch verursachte Anziehung des Ankers sehr kurze Reaktionszeiten des Systems.

Der Magnetaktuator, welcher mittels eines bestimmten Signals einer Sensorik das Bremssystem der Werkzeugmaschine auslöst, kann bspw. vor Beginn des Maschinenbetriebes auf seinen Zustand hin überprüft werden. Anhand der Signalantwort kann auf das Vorhandensein und den Zustand aller relevanten Kontaktierungen des Systems geschlossen werden.

Erkennt das Diagnosesystem die Funktionsfähigkeit des Akuators, so kann ein Startsignal für die Freigabe des Motorbetriebes ausgegeben werden.

Zu Diagnosezwecken wird der Aktuator mit einem Diagnosestrom beaufschlagt, der kleiner ist, als der Strom, der in einem Auslösefall benötigt wird. Bei Beaufschlagung des Aktuators mit dem Diagnosestrom wird der Anker nicht angezogen, wohl aber kann man aus gemessenen Kenndaten des durch den Aktuator geleiteten Diagnosestrom, wie beispielsweise die Stromstärke, die Spannung oder auch den zeitlichen Verlauf dieser Größen, auf den Zustand des Aktuators schließen.

Mittels einer Diagnoseschaltung, welche in der Lage ist, eine analoge Größe im Bereich weniger Millisekunden aufzunehmen und auszuwerten, kann sogar der Signalverlauf, bspw. in Form eines Stromanstieges genutzt werden, um auf die Beschaffenheit des Aktuators, beispielsweise dessen Wicklung zu schließen, indem die gewonnenen Messdaten mit im Diagnosesystem hinterlegten Solldaten verglichen werden.

In vorteilhafter Weise wird daher eine Kennlinie, insbesondere eine Kennlinie des durch den Aktuator geschickten Diagnosestroms gemessen und ausgewertet.

Durch die vorteilhafte Anordnung des Bremssystems bzw. des Aktuators ist es weiterhin möglich, einen umlaufenden Anker des elektromagnetischen Aktuators mittels eines fest am Gehäuse befindlichen Magneten, insbesondere einem Elektromagneten anzuziehen, wodurch sich die Ansteuerung des Aktuators immens vereinfacht. Hierfür muss der Hub der Ankerplatte folgerichtig durch Anschläge begrenzt werden, um ein Schleifen der mitdrehenden Ankerplatte am feststehenden Magneten zu verhindern.

Aufgrund der Gestaltung des Bremssystems und insbesondere der Verriegelungseinheit des Bremssystems ist die Stellung der Ankerplatte ein direkter Hinweis auf Systemzustände und daher als maßgeblicher Punkt einer Systemdiagnose zu bewerten.

Mittels eines speziellen Sensors kann zu jedem Zeitpunkt der Systemprüfung eine Information über die Stellung dieser Ankerplatte ans System weitergegeben und ausgewertet werden, um entsprechend Maßnahmen für den künftigen Betrieb des Gerätes abzuleiten.

Weiterhin besteht die Möglichkeit, über Bestimmung und Auswertung des sich während der Diagnose im Magnetkreis des Aktuators aufgrund des Diagnosestroms aufbauenden Magnetfeldes (Diagnosemagnetfeld) auf den Abstand der Ankerplatte zum Magneten zu schließen. Dies kann ggf. über elektrische Hilfsgrößen geschehen, wobei ein zusätzlicher Sensor zur Erkennung der Stellung der Ankerplatte eingespart wird. Als eine derartige Hilfsgröße bietet sich die Induktivität der Spule an, die von der Stellung der Ankerplatte abhängig ist. Durch Vermessung der Induktivität der Spule mit Hilfe eines Diagnosestromes der Diagnoseeinrichtung, kann auf die Position und insbesondere auf den Abstand der Ankerplatte zur anziehenden Spule geschlossen werden. Da die Sperrbolzen der Verriegelungseinrichtung an der Ankerplatte vorgesehen sind, kann auf diese Weise festgestellt werden, ob die Sperrbolzen in ihrer vorgesehenen Position sind und im Auslösungsfall korrekt herausgezogen werden könnten.

Das Diagnosesystem ermöglicht somit mit Hilfe des Diagnosestrom die Überprüfung sowohl der Funktionsfähigkeit des Aktuators als auch die korrekte Anordnung der Sperrbolzen des Verriegelungssystems.

Die Diagnosefunktionen des Diagnosesystems können zusätzlich bei laufendem Gerät in vordefinierten Zeitabständen, beispielsweise minütlich durchgeführt werden, um Informationen über mögl. Veränderungen des Schutzsystems während des gewöhnlichen Maschinenbetriebes zu erhalten. Sinnvollerweise sollte das Diagnosesystem auch jeweils beim Einschalten der Werkzeugmaschine aktiviert werden. Es wird dann zuerst eine Diagnose des Notbremssystems der Vorrichtung durchgeführt und in Abhängigkeit von dem Ergebnis schaltet das Diagnosesystem die Werkzeugmaschine frei oder auch nicht. Im Freigabefall kann beispielsweise der Motor der Werkzeugmaschine aktiviert werden. Detektiert das Diagnosesystem eine Unregelmäßigkeit, d.h. insbesondere eine Abweichung von den gemessenen Kenngrößen zu den abgelegten Sollgrößen, so wird die Werkzeugmaschine nicht gestartet und ein Anwender über das Vorliegen eines möglichen Problems informiert.

Zudem bezieht sich die vorliegende Erfindung auf eine Werkzeugmaschine mit einem Notbremssystem und insbesondere einem Diagnosesystem der zuvor beschriebenen Art, wobei es sich bei der Werkzeugmaschine bevorzugt um eine Säge, insbesondere eine Kreissäge handelt, genauer gesagt um eine Tischkreissäge, eine Kapp- und Gehrungssäge oder eine Paneelsäge handeln kann.

Es sollte jedoch klar sein, dass das erfindungsgemäße Diagnosesystem auch auf andere Werkzeugmaschinen anwendbar ist, welche aus spezifischem Anlass auf eine gezielt auslösbare Verzögerung unter gegebenem Zeitrahmen im Bereich weniger Millisekunden angewiesen sind. Eine Anpassung dieser Erfindung an eine andere Werkzeugmaschine ist im Einzelfall möglich.

Ausführungsbeispiele

Nachfolgend werden beispielhafte Ausführungsformen der vorliegenden Erfindung unter Bezugnahme auf die beiliegenden Zeichnungen genauer beschrieben. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen, weiteren Kombinationen zusammenfassen.

Fig. 1      eine schematische Vorderansicht eines Notbremssystems gemäß einer Ausführungsform der vorliegenden Erfindung in einem Zustand, in dem der Bremsvorgang nicht ausgelöst wurde;

Fig. 2      eine schematische Vorderansicht des in Fig. 1 dargestellten Notbremssys- tems in einem Zustand, in dem der Abbremsvorgang ausgelöst wurde;

Fig. 3      eine Längsschnittansicht des in den Fig. 1 und 2 dargestellten Notbrems- systems in einem Zustand, in dem der Bremsvorgang nicht ausgelöst wur- de;

Fig. 4      eine schematische Längsschnittansicht des in den Fig. 1 bis 3 dargestellten Notbremssystems in einem Zustand, in dem der Bremsvorgang ausgelöst wurde;

Fig. 5      eine schematische Querschnittansicht des in den Fig. 1 bis 4 dargestellten Notbremssystems in einem Zustand, in dem der Bremsvorgang nicht aus- gelöst wurde;

Fig. 6      eine schematische Querschnittansicht des in den Fig. 1 bis 5 dargestellten Notbremssystems in einem Zustand, in dem der Bremsvorgang ausgelöst wurde;

Fig.7      eine schematische Darstellung des Aktuators des erfindungsgemäßen Bremssystems im Zusammenspiel mit dem Diagnosesystem;

Fig. 8      eine Schnittdarstellung des Magnetaktuators;

Fig. 9      eine schematische Darstellung des erfindungsgemäßen Bremssystems mit Verriegelungseinrichtung;

Fig. 10      ein Ausführungsbeispiel einer erfindungsgemäßen Werkzeugmaschine in Form einer Tischkreissäge in einer Seitenansicht;

Fig. 11      ein alternatives Ausführungsbeispiel einer erfindungsgemäßen Werkzeug- maschine in Form einer Tischkreissäge in einer Aufsicht;

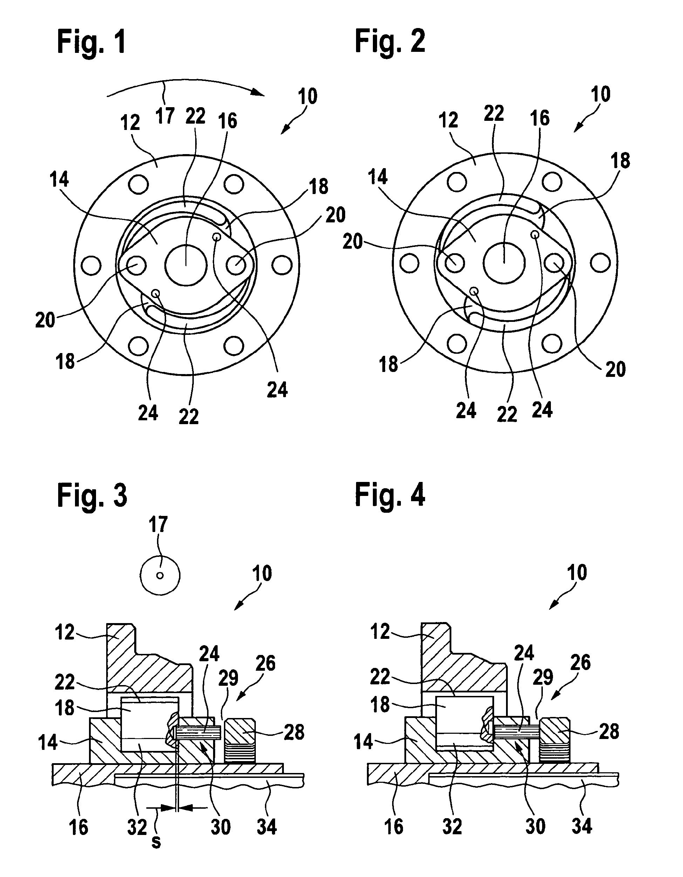

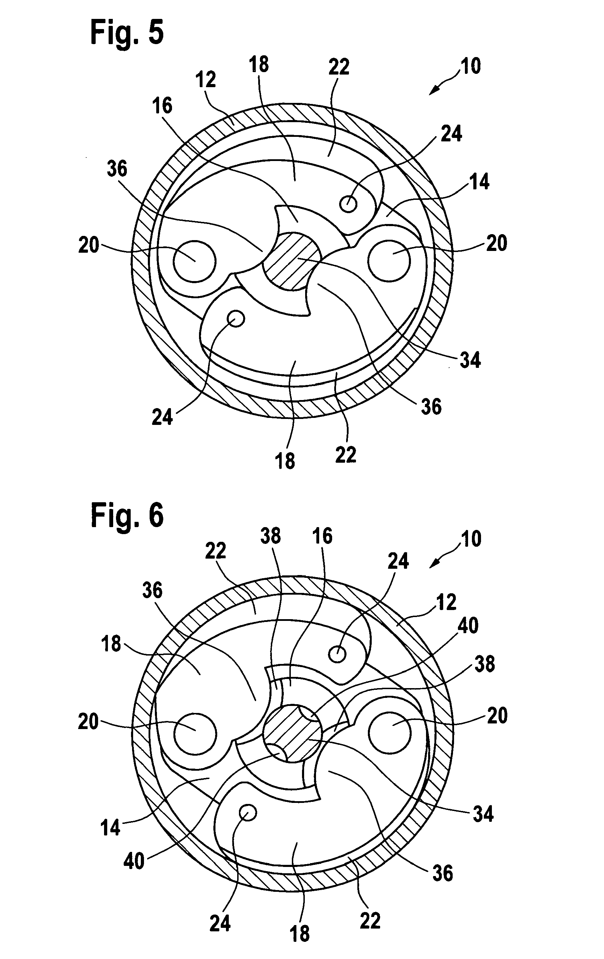

Mit den Figuren 1 bis 6 wird der prinzipielle Aufbau des erfindungsgemäßen Notbremssystems erläutert.

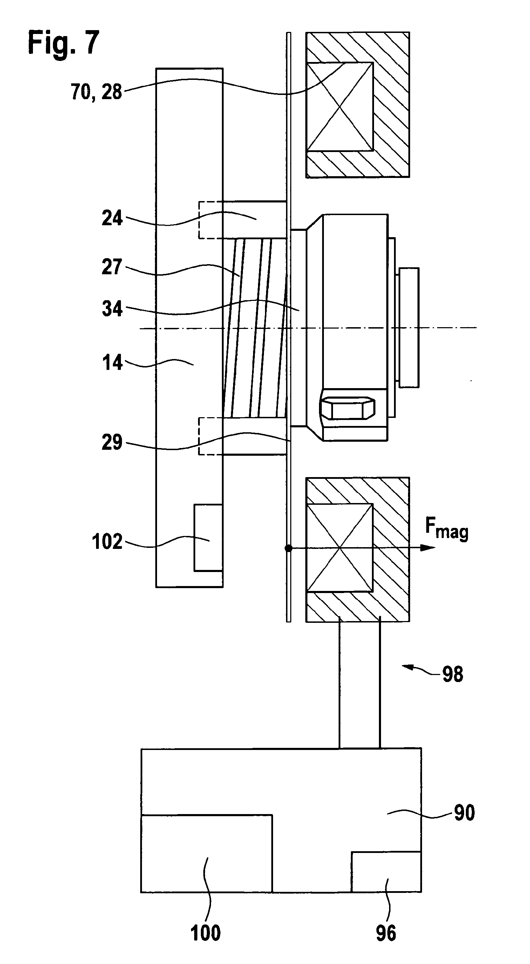

Die Figuren 7, 8 und 9 dienen der Beschreibung von Details des Aktuators der Verriegelungeinrichtung des erfindungsgemäßen Bremssystems, des Diagnosesystems, sowie des Zusammenspiels dieser beiden Einheiten.

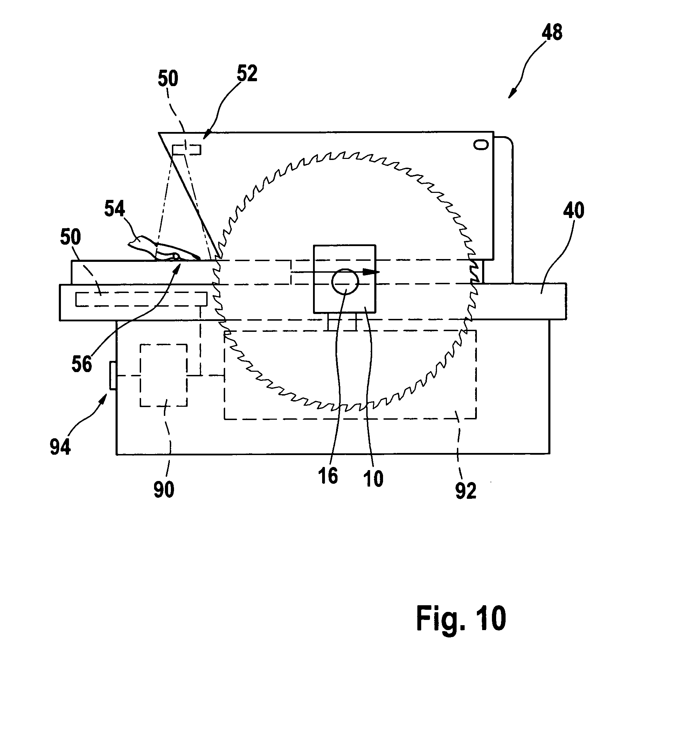

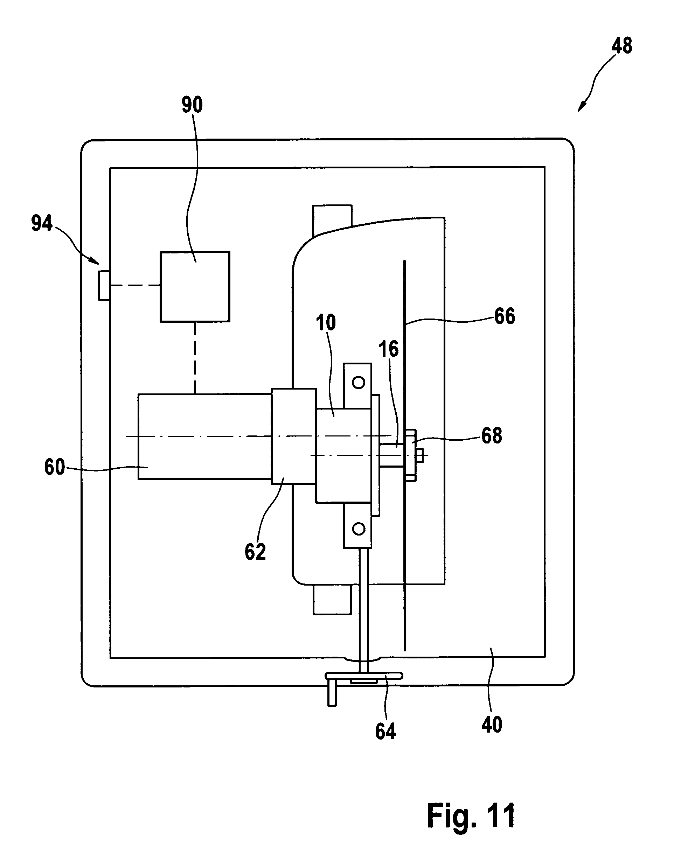

Die Figuren 10 und 11 zeigen eine erfindungsgemäße Werkzeugmaschine in Form einer Tischkreissäge mit einem erfindungsgemäßen Notbremssystem.

Die Fig. 1 bis 6 zeigen schematische Ansichten eines Notbremssystems gemäß einer Ausführungsform der vorliegenden Erfindung, das allgemein mit der Bezugsziffer 10 bezeichnet ist und dazu dient, beispielweise ein Sägeblatt einer Tischkreissäge (hier nicht gezeigt, siehe vielmehr Figur 10) in einer Gefahrensituation innerhalb eines sehr kurzen Zeitraums, der im Bereich weniger Millisekunden liegt, zum Stillstand zu bringen.

Das Notbremssystem 10 für eine Werkzeugmaschine, zum abrupten Abbremsen einer umlaufenden Welle 16 gemäß den Figuren 1 bis 6 umfasst zumindest eine Bremstrommel 12 und zumindest eine Bremsbacke 18, die zum Abbremsen einer Welle 16, miteinander in Eingriff gebracht werden, wobei der Bremseingriff zwischen der Bremstrommel 12 und der Bremsbacke 18 unter dem Einfluss einer aus der Rotation einer Welle 16 resultierenden Fliehkraft erfolgt, wenn eine Verriegelungseinrichtung (26) gelöst wird. Erfindungsgemäß ist, ein Diagnosesystem (90) vorhanden, welches Diagnosemittel (98, 102) besitzt, die es ermöglichen, die Funktionsfähigkeit der Verriegelungseinrichtung (26) zu prüfen.

Das Notbremssystem 10 umfasst eine feststehende Bremstrommel 12, die an einem nicht näher dargestellten Rahmenbauteil einer Säge befestigt ist. Dieses Rahmenbauteil muss konstruktiv derart ausgelegt sein, dass es den während der Verzögerungsphase entstehenden Bremsmomenten standhält und diese aufnehmen kann. Ferner umfasst das Notbremssystem 10 einen Bremsbackenträger 14, der fest mit einer sägeblattseitigen Abtriebswelle 16 verbunden ist, so dass er mit dieser in der mit dem Pfeil 17 gekennzeichneten Drehrichtung umläuft. An dem Bremsbackenträger 14 sind zwei diametral einander gegenüberliegende Bremsbacken 18 befestigt, die jeweils um einen Schwenkbolzen 20 drehbar gelagert sind. Die Bremsbacken 18 sind an ihrer zur Bremstrommel 12 weisenden Fläche jeweils mit einem Reibbelag 22 versehen, wobei diese Reibbeläge 22 während eines Abbremsvorgangs des Notbremssystems 10 mit der feststehenden Bremstrommel 12 in Eingriff kommen, so dass die Reibbeläge 22 und die Bremstrommel 12 eine Reibpaarung bilden. In dem in Fig. 1 dargestellten Zustand, in dem der Bremsvorgang noch nicht ausgelöst wurde, werden die Bremsbacken 18 mit Hilfe von Sperrbolzen 24 einer Verriegelungseinrichtung 26 fest an dem Bremsbackenträger 14 gehalten, so dass sie sich nicht um die Schwenkbolzen 20 drehen können.

Diese Sperrbolzen 24 sind Teil der Verriegelungseinrichtung 26, die ferner einen Magnet-Aktuator 28 aufweist, mit dem die Sperrbolzen 24 zwischen einer verriegelten Stellung, in der die Bremsbacken 18 an dem Bremsbackenträger 14 gehalten werden, und einer entriegelten Stellung verstellbar sind, in der die Bremsbacken 18 derart freigegeben werden, dass diese eine Schwenkbewegung um ihre Schwenkbolzen 20 in Richtung der Bremstrommel 12 ausführen, um den Bremseingriff zwischen den Reibbelägen 22 und der Bremstrommel 12 zu erzeugen.

Darüber hinaus besitzt das erfindungsgemäße System auch eine Diagnoseeinheit, die die Funktionstüchtigkeit des Notbremssystems und insbesondere der Verriegelungseinheit prüft. Das Diagnosesystem kontrolliert insbesondere die Funktionsfähigkeit des Aktuators des Notbremssystems, sowie die korrekte Anordnung und Position der Verriegelungseinheit. Auf das Diagnosesystem wird im Zusammenhang mit den Figuren 7 bis 11 noch näher eingegangen werden.

Wie es in Fig. 3 gezeigt ist, ist der Magnet-Aktuator 28 der Verriegelungseinrichtung 26 fest an der Abtriebswelle 16 befestigt. Alternativ kann der Magnet-Aktuator 28 auch an einem nicht dargestellten, ortfesten Gehäuseteil befestigt sein und berührungslos auf die Sperrbolzen 24 einwirken. Die Sperrbolzen 24, die durch den Magnet-Aktuator 28 vor- und zurückbewegbar sind, erstrecken sich durch in dem Bremsbackenträger 14 vorgesehene Durchgangsöffnungen 30 und greifen in dem in den Fig. 1, 3 und 5 dargestellten Zustand, in dem der Bremsvorgang noch nicht eingeleitet wurde, in Eingriffsöffnungen 32 ein, die jeweils in den Bremsbacken 18 vorgesehen sind. Auf diese Weise werden die Bremsbacken 18 an dem Bremsbackenträger 14 arretiert.

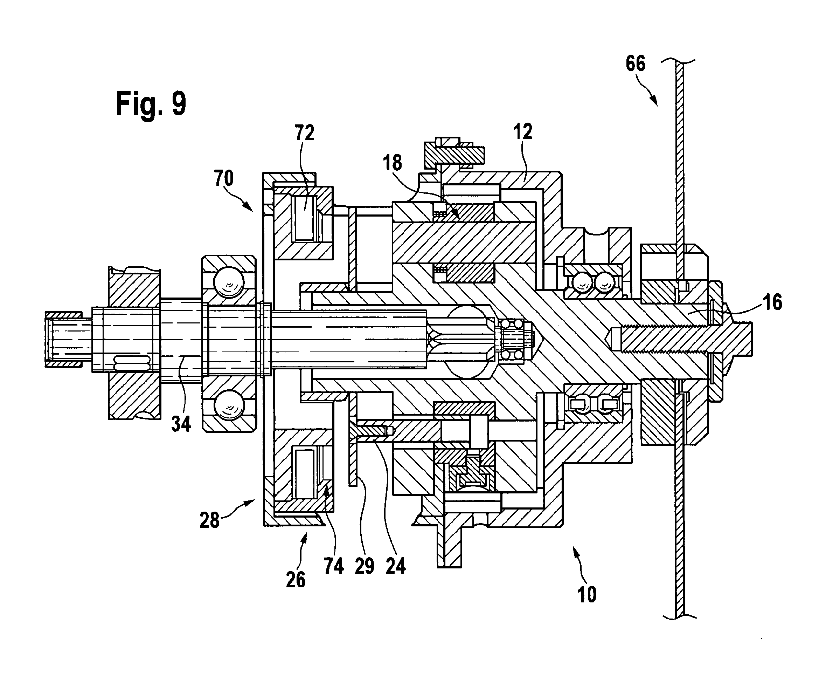

Im Falle der Auslösung des Bremssystems zieht der Magnet-Aktuator 28 einen Ringanker 29, an welchem die Sperrbolzen 24 befestigt sind, um einen definierten Ausrückweg s aus dem Bremsbackenträger 14 und gibt somit die Bremsbacken 18 frei (siehe hierzu Figuren 4 und 9). Diese legen sich infolge der durch die umlaufende Abtriebswelle 16 erzeugten Fliehkräfte bzw. der Fliehbeschleunigung an die feststehende Bremstrommel 12 an, wodurch die zur Verzögerung der Abtriebswelle 16 erforderliche Reibpaarung zwischen den Reibbelägen 22 der Bremsbacken 18 und der Bremstrommel 12 gebildet wird. Auch wenn die Sperrbolzen 24 bei dem vorliegenden Ausführungsbeispiel mit Hilfe des Magnet-Aktators 28 vor- und zurückbewegt, sei darauf hingewiesen, dass die Sperrbolzen 24 alternativ auch unter der Wirkung einer Federkraft 27 oder dergleichen in einer der beiden Bewegungsrichtungen bewegt werden können. So kann die Vorwärtsbewegung der Sperrbolzen 24 unter Einfluss des Magnet-Aktuators 28 erfolgen, während die Zurückstellung der Sperrbolzen 24 durch ein oder mehrere Federelemente 27 erfolgt, oder umgekehrt (siehe hierzu beispielsweise Figur 7).

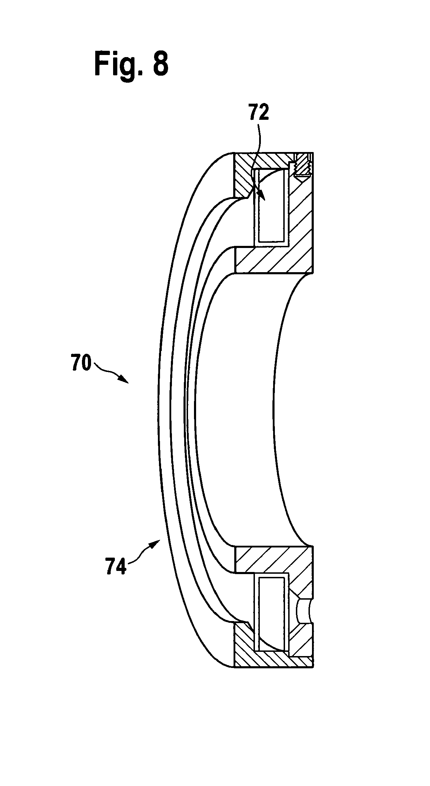

Der im Auslösefall angesteuerte Magnetaktuator 28 besteht - wie insbesondere in Figur 8 im Detail dargestellt - aus einem Magnetkreis 70, bestehend aus Spule 72 und magnetischem Rückschluss 74, welcher im Auslösefall aktiviert werden kann. Wie insbesondere in Figur 3 und 8 dargestellt, wird der Anker 29 in einem definierten Abstand zum Aktuator 28 platziert. Dieser Abstand bildet zugleich das Überstandsmaß $S_L$ der Sperrbolzen 24 im Bremssystem.

Durch eine Magnetkraft $F_{mag}$ kann dieser Anker 29 vom Magnetkreis 70 angezogen werden, wodurch die Sperrbolzen 24 des Bremssystems eine gleichbedeutende Bewegung ausführen. Hierdurch wird das Bremssystem 10 aktiviert. Der Magnetaktuator 28 ist hierbei stets fest, beispielsweise am Gehäuse, angebracht, um die Kraft $F_{mag}$ abstützen zu können.

Figur 7 zeigt nun ein Detail der Verriegelungseinrichtung 26 des erfindungsgemäßen Notbremssystems zusammen mit der Diagnoseeinheit 90, die die korrekte Funktionsfähigkeit des Verriegelungssystems 26 sicher stellen soll. Die Verriegelungseinrichtung 26 besteht zumindest aus dem Aktuator 28, der ein elektromagnetischer Aktuator ist, und den Sperrbolzen 24. Im Falle der Auslösung des Bremssystems zieht der Magnet-Aktuator 28 einen Ringanker 29, an welchem die Sperrbolzen 24 befestigt sind, um einen definierten Ausrückweg s aus dem Bremsbackenträger der Bremseinrichtung heraus und gibt somit die Bremsbacken frei.

Dies setzt jedoch voraus, dass der Magnet-Aktuator zuverlässig arbeitet und die Sperrbolzen sich an der richtigen Position befinden. Aufgabe des Diagnosesystems 90 ist es, diese Voraussetzungen zu überprüfen und bei Nichtvorliegen der Voraussetzungen, einen Betrieb der Werkzeugmaschine zu verhindern.

Die Funktionen zur Diagnose des Systemzustandes des Bremssystems können beispielsweise mittels einer eigens hierfür vorgesehenen Elektronik in einer Diagnoseschaltung 96 abgearbeitet werden. Entsprechend dem Ergebnis der Diagnose kann dann die Werkzeugmaschine freigegeben werden oder beispielsweise auch gesperrt werden.

Der Magnet-Aktuator 28, welcher mittels eines bestimmten Signals einer Sensorik das Bremssystem der Werkzeugmaschine auslöst, kann beispielsweise vor Beginn des Maschinenbetriebes auf seinen Zustand hin überprüft werden. Anhand der Signalantwort kann auf das Vorhandensein und den Zustand aller relevanten Kontaktierungen des Systems geschlossen werden.

Erkennt das Diagnosesystem 90 die Funktionsfähigkeit des Akuators 28, so kann ein Startsignal für die Freigabe des Motorbetriebes ausgegeben werden.

Zu Diagnosezwecken wird der Aktuator 28 mit einem Diagnosestrom beaufschlagt, der kleiner ist, als der Strom, der in einem Auslösefall benötigt wird. Bei Beaufschlagung des Aktuators 28 mit dem Diagnosestrom wird der Anker 29 nicht angezogen, wohl aber kann man aus gemessenen Kenndaten des durch den Aktuator geleiteten Diagnosestroms 98, wie beispielsweise die Stromstärke, die Spannung oder auch den zeitlichen Verlauf dieser Größen, auf den Zustand des Aktuators 28 und insbesondere auf den Zustand der elektromagnetischen Spule 72 schließen.

Mittels einer Diagnoseschaltung 96, welche in der Lage ist, eine analoge Größe im Bereich weniger Millisekunden aufzunehmen und auszuwerten, kann sogar der Signalverlauf, beispielsweise in Form eines Stromanstieges genutzt werden, um auf die Beschaffenheit des Aktuators 28, beispielsweise dessen Wicklung 72 zu schließen, indem die gewonnenen Messdaten mit in einem Speichermedium 100 des Diagnosesystem 90 hinterlegten Solldaten verglichen werden.

Hierzu wird eine Kennlinie, insbesondere eine Kennlinie des durch den Aktuator 28 geschickten Diagnosestroms 98 gemessen und ausgewertet.

Aufgrund der Gestaltung des Bremssystems und insbesondere der Verriegelungseinheit des Bremssystems ist die Stellung der Ankerplatte 29 ein direkter Hinweis auf Systemzustände (verriegelt oder nicht verriegelt), insbesondere also auf die Position der Sperrbolzen 24 und daher als maßgeblicher Punkt einer Systemdiagnose zu bewerten.

Mittels eines speziellen Sensors 102 kann zu jedem Zeitpunkt der Systemprüfung eine Information über die Stellung dieser Ankerplatte 29 ans System 90 weitergegeben und ausgewertet werden, um entsprechend Maßnahmen für den künftigen Betrieb des Gerätes abzuleiten.

Weiterhin besteht die Möglichkeit, über Bestimmung und Auswertung des sich während der Diagnose im Magnetkreis 70 des Aktuators 28 aufgrund des Diagnosestroms 98 aufbauenden Magnetfeldes (Diagnosemagnetfeld) auf den Abstand der Ankerplatte 29 zum Magneten 29 zu schließen. Dies kann ggf. über elektrische Hilfsgrößen geschehen, wobei in diesem Falle der zusätzliche Sensor 102 zur Erkennung der Stellung der Ankerplatte 29 eingespart wird. Als eine derartige Hilfsgröße bietet sich beispielsweise die Induktivität der Spule 72 an, die auch von der Stellung der Ankerplatte 29 abhängig ist. Durch Vermessung der Induktivität der Spule 72 mit Hilfe eines Diagnosestromes 98 der Diagnoseeinrichtung 90, kann auf die Position und insbesondere auf den Abstand der Ankerplatte 29 zur anziehenden Spule 72 des Aktuators geschlossen werden. Da die Sperrbolzen 24 der Verriegelungseinrichtung 26 an der Ankerplatte 29 vorgesehen sind, kann auf diese Weise festgestellt werden, ob die Sperrbolzen 24 in ihrer vorgesehenen, definierten Position sind und im Auslösungsfall korrekt herausgezogen werden könnten.

Das Diagnosesystems 90 ermöglicht somit mit Hilfe des Diagnosestroms 98 sowohl die Überprüfung sowohl der Funktionsfähigkeit des Aktuators 28 als auch die korrekte Anordnung der Sperrbolzen 24 des Verriegelungssystems 26.

Die Diagnosefunktionen des Diagnosesystems 90 können zusätzlich bei laufendem Gerät in vordefinierten Zeitabständen, beispielsweise minütlich durchgeführt werden, um Informationen über mögliche Veränderungen des Notbremssystems während des gewöhnlichen Maschinenbetriebes zu erhalten. Sinnvollerweise sollte das Diagnosesystem 90 insbesondere auch beim Einschalten der Werkzeugmaschine aktiviert werden. Es wird dann zuerst eine Diagnose des Notbremssystems der Vorrichtung durchgeführt und in Abhängigkeit von dem Ergebnis schaltet das Diagnosesystem 90 die Werkzeugmaschine frei oder auch nicht. Im Freigabefall kann beispielsweise der Motor der Werkzeugmaschine aktiviert werden. Detektiert das Diagnosesystem eine Unregelmäßigkeit, d.h. insbesondere eine Abweichung der gemessenen Kenngrößen zu den abgelegten Sollgrößen, so wird die Werkzeugmaschine nicht gestartet und ein Anwender über das Vorliegen eines möglichen Problems informiert.

In Figur 8 ist ein Modellschnitt durch den Magneten geführt, wodurch die Ausführung eines geteilten Rückschlusses zu sehen ist. Diese Variante ist vorteilhaft, um die Montage des Magnetkreises 60 zu ermöglichen.

Figur 9 zeigt die Anordnung von Bremseinrichtung 10 inklusive der Verriegelungseinrichtung 26 in einer Übersichtsdarstellung.

Aufgrund der kritischen Zeitvorgaben des genannten Bremssystems scheint es unter anderem zielführend, ein Konzept zu wählen, welches die Anwendung des technischen Prinzips der Selbsthilfe ermöglicht. Dies bedeutet, dass die zur Auslösung eingebrachte Spannkraft $F_{Sp}$ innerhalb des Systems um ein Vielfaches verstärkt wird, wobei die erzeugte Reaktionskraft $F_{Reakt}$, hier in Form einer Reibkraft $F_R$ wiederum zur Erhöhung der eingeleiteten Spannkraft $F_{Sp}$ beiträgt. Diese Eigenschaft wird auch Selbstverstärkung oder Servo-Wirkung genannt. Die hierdurch charakterisierten Systeme liefern prinzipiell die geringst möglichen Verzögerungszeiten unter Verwendung niedriger Spannkräfte, so dass sowohl die Masse der Auslöseglieder als auch die benötigte Auslösezeit $t_A$ minimiert werden können.

Der Verstärkungsfaktor definiert sich weiterhin wie folgt:

$$C^* = \frac{F_R}{F_{Sp}} = \frac{\mu \cdot \tan\alpha}{\tan\alpha - \mu}$$

Ist der Faktor $C^*$ positiv, so wirken die Kräfte in dem in der Skizze angenommenen Richtungssinn. Die Reibkraft $F_R$ ergibt sich hierbei aus der um den Faktor $C^*$ verstärkten Spannkraft $F_{SP}$. Für $\mu = \tan\alpha$ weist die Gleichung für $C^*$ eine Polstelle auf, so dass dieser Verstärkungsfaktor gegen Unendlich geht. In diesem Punkt herrscht praktisch der Systemzustand eines labilen Gleichgewichts. Für die Wahl der Parameter $\tan\alpha < \mu$ ergibt sich ein negativer Verstärkungsfaktor $C^*$. Dies bedeutet eine theoretische Umkehr des Richtungssinns der Spannkraft $F_{SP}$, welche eintreten müsste, um das Kräftegleichgewicht aufrecht zu erhalten. In Realität kennzeichnet dieser Fall einen speziellen Zustand eines selbstverstärkenden Systems. Aufgrund der entstehenden, stetigen, wechselseitigen Erhöhung der Reib- und Normalkräfte tritt im Idealfall nach kurzer Zeit Haftreibung innerhalb der Reibpaarung auf. Diese führt in Folge zur Blockierung des gesamten Systems. In diesem Zusammenhang wird gemeinhin von Selbsthemmung gesprochen. In vorteilhafter Weise treten dabei Kräfte auf, die größer sind, als die durch die Fliehkraft der Bremsbacken vermittelten Kräfte.

In Abhängigkeit von dem relativen Reibkoeffizienten $\mu$ der Reibpartner ergeben sich somit Winkel $\alpha$, die Bereiche bezeichnen, in denen Selbstverstärkung bzw. Selbsthemmung auftritt. Es könnte hierbei vorteilhaft sein, den Reibbelag zumindest eines Reib- bzw. Bremspartners inhomogen zu gestalten.

Aufgrund des zuvor beschriebenen Aufbaus des Notbremssystems 10 kann das Zeitintervall für die Auslösezeit des Bremsvorgangs stark verkürzt werden, da der Bremseingriff zwischen der Bremstrommel 12 und den Bremsbacken 18 unter dem Einfluss der Fliehkraft bzw. Fliehbeschleunigung erfolgt, welche aus der Rotation der Abtriebswelle 16 resultiert. Darüber hinaus kommt es zu einer selbstverstärkenden und sogar selbsthemmenden Wirkung der Abbremsung, so dass das die Bremswirkung erhöht und die Bremszeiten vorteilhaft verkürzt werden können.

Aufgrund der Verwendung eines zweiseitigen Angriffes der Reibumfangskraft der Reibpaarung werden die vorliegenden eingesetzten Wälzlagerungen geschont und müssen aufgrund von Belangen der Dauerhaltbarkeit des Gesamtsystems nicht überarbeitet oder gar neu konzipiert werden, wodurch wiederum eine erhöhte Massenträgheit ins System eingebracht würde.

Durch einen Aufbau, wie er vorliegend beschrieben wurde, werden zudem umlaufende Außengeometrien der Bremseinheit vermieden, wodurch ein leicht zu kapselndes, geschlossenes System mit kompaktem Aufbau realisiert werden kann, welches sich zusätzlich positiv in die speziellen Belange des Arbeitsschutzes im Umgang mit Werkzeugmaschinen eingliedert.

Es sollte klar sein, dass die Betätigung des Magnet-Aktuators 28 durch Ausgangssignale entsprechender Sensoren erfolgt, die einen Zustand erfassen, in dem ein Bediener gefährlich nahe an das Sägeblatt der Tischkreissäge kommt. Derartige Sensoren sind im Stand der Technik bekannt, weshalb auf diese in der vorliegenden Beschreibung nicht näher eingegangen wurde.

Die Figuren 10 und 11 zeigen Ausführungsbeispiele einer erfindungsgemäßen Werkzeugmaschine, mit einem Notbremssystem 10 und einem Sensorsystem 52 zur Anwesenheitserkennung einer Materialart, insbesondere von Gewebe, wie dem menschlichen Gewebe einer Hand. Die in einer Seitenansicht dargestellte Kreissäge 48 der Figur 10 ist eine Tischkreissäge (Benchtop-System) und weist eine Erkennungsvorrichtung 52 auf, die zur Anwesenheitserkennung einer Materialart 54, insbesondere beispielsweise von Gewebe, in einem Werkzeugmaschinenarbeitsbereich 56 vorgesehen ist. Die Vorrichtung 52 zur Detektion weist zumindest einen Sensor 50 auf, der in einer Ebene oberhalb des Arbeitsbereiches der Werkzeugmaschine installiert sein kann, wie dies in Figur 10 angedeutet ist. Alternativerweise kann der Sensor 50 der Vorrichtung 52 auch direkt im Arbeitstisch 40 integriert werden. Beide Möglichkeiten können sowohl einzeln, als auch gleichzeitig realisiert sein, wie dies in Figur 10 beispielhaft dargestellt ist. Die Vorrichtung 52 zur Detektion insbesondere von menschlichem Gewebe aber auch von anderen Materialien kann beispielsweise und nicht abschließend Radarsensoren, insbesondere UWB-Radarsensoren (UWB = Ultra Wide Band) und / oder auch optische Sensoren, insbesondere NIR-Systeme (NIR = Near Infra Red) umfassen.

Bei Detektion beispielsweise einer Hand 54 im Gefahrenbereich unmittelbar vor dem Sägeblatt der Werkzeugmaschine wird ein Aktivitätssignal generiert, welches die Sicherungsbolzen 24 der Bremsbacken 18 löst, so dass diese - wie oben im Detail beschrieben - durch die Fliehkraft getrieben gehen die Bremstrommel 12 getrieben werden und den Abbremsvorgang einleiten.

Die vorliegende Erfindung ist darauf ausgerichtet, das Bremssystem vor dem Einschalten, als auch während des Gerätebetriebes der Werkzeugmaschine mit Hilfe eines Diagnosesystems in vorgegebenen Intervallen anhand spezieller Kriterien zu überwachen und mittels hinterlegten Kenndaten auf dessen Systemzustand zu schließen. Ableitbare Maßnahmen können in Form der Verwehrung des Einschaltens der Werkzeugmaschine, die Einleitung einer vom System ausgelösten Notbremsung, Einblendungen von Meldungen auf einem Display oder dergleichen stattfinden.

Dazu ist die Diagnoseeinheit 90 in vorteilhafter Weise zwischen einer Steuereinheit 92 der Werkzeugmaschine und einem Netzschalter 94 für die Werkzeugmaschine angeordnet.

Nach Betätigung des Netzschalters 94 wird die Diagnoseroutine gestartet, um sicher zu stellen, dass das Verriegelungssystem 26 im Notfall zuverlässig gelöst werden kann. Dazu wird, wie oben beschrieben beispielsweise der Zustand des Aktuators 28 und die Position der Sperrbolzen 24 der Bremsbacken vermessen. Stimmen die Daten mit den im System abgelegten Solldaten überein, so wird die Steuereinheit 92 der Säge aktiviert und beispielsweise der Motor der Säge gestartet und die Sensorik 52 zur Anwesenheitserkennung einer Materialart, insbesondere von Gewebe, wie dem menschlichen Gewebe einer Hand aktiviert.

Die vorliegende Diagnoseeinheit ist darauf ausgerichtet, das Bremssystem vor dem Einschalten, aber auch während des Gerätebetriebes der Werkzeugmaschine in vorgegebenen Intervallen, möglichst regelmäßig, anhand spezieller Kriterien zu überwachen und mittels hinterlegten Kenndaten auf dessen Systemzustand zu schließen. Ableitbare Maßnahmen können in Form der Verwehrung des Einschaltens der Werkzeugmaschine, die Einleitung einer vom System ausgelösten Notbremsung, Einblendungen von Meldungen auf einem Display oder dergleichen stattfinden. Sollte beispielsweise eine Abweichung der Funktionsfähigkeit des Aktuators detektiert werden, so kann - ohne dass das Notbremssystem - aktiviert wird, eine Bremsung des Motors eingeleitet werden und /oder das System ausgeschaltet werden (Sicherheitsabschaltung).

Ein Anwender kann dann beispielsweise zum Wiedereinschalten der Werkzeugmaschine aufgefordert werden. Beim Wiedereinschalten der Maschine läuft dann, wie oben beschrieben, wider das Diagnoseprogramm der Diagnoseeinheit 90 ab und bestätigt damit, ob eine mögliche Fehlfunktion des Notbremssystems der Werkzeugmaschine zu befürchten ist oder, ob die Sicherheitsabschaltung aufgrund einer Fehlmessung vorgenommen wurde.

Figur 11 zeigt das Ausführungsbeispiel einer Tischkreissäge 48 in einer Aufsicht. Ein Motor 60 treibt vermittelt über ein Getriebe 62 ein Werkzeug an, welches im Ausführungsbeispiel der Figur 11 ein Sägeblatt 66 ist. Das Sägeblatt 66 ist über eine Spannvorrichtung 68 auf einer Abtriebswelle 16 befestigt. Das Notbremssystem 10 ist dabei in vorteilhafter Weise zwischen dem Getriebe 62 und der Welle 16 angeordnet, d.h. ermöglicht es, im Aktivierungsfall, die Welle 16 vom antreibenden Getriebe 62 zu entkoppeln. Im Falle einer Notbremsung wird dadurch eine Überlastung der Getriebestufe vermieden. Getriebestufe und Antriebswelle werden dann folgerichtig voneinander abgekoppelt.

Zwischen dem Motor 60 und einem Netzschalter des Systems, der in der Figur 11 nicht sichtbar unterhalb des Tischniveaus vorgesehen ist, ist wiederum eine Diagnoseeinheit 90 angeordnet, die vor Aktivierung des Motors prüft, ob die Verriegelungseinrichtung im Bremsfall zuverlässig gelöst werden könnte.

Auch wenn bei der zuvor beschriebenen Ausführungsform eine Tischkreissäge als Beispiel einer Werkzeugmaschine gewählt wurde, sollte klar sein, dass das Prinzip der vorliegenden Erfindung auch auf andere Werkzeugmaschinen anwendbar ist.

Schließlich sollte klar sein, dass die zuvor beschriebene Ausführungsform des erfindungsgemäßen Notbremssystems in keiner Weise einschränkend ist. Vielmehr sind Modifikationen und Änderungen möglich, ohne den Schutzbereich der vorliegenden Erfindung zu verlassen, der durch die beiliegenden Ansprüche definiert ist.

**Patentansprüche**

1. Notbremssystem (10) für eine Werkzeugmaschine, zum abrupten Abbremsen einer umlaufenden Welle (16), umfassend zumindest eine Bremstrommel (12)

und zumindest eine Bremsbacke (18), die zum Abbremsen der Welle (16), miteinander in Eingriff gebracht werden, wenn eine Verriegelungseinrichtung (26) gelöst wird, **dadurch gekennzeichnet**, das ein Diagnosesystem (90) vorhanden ist, welches Diagnosemittel (96,98,102) besitzt, die es ermöglichen, die Funktionsfähigkeit der Verriegelungseinrichtung (26) zu prüfen.

2. Notbremssystem (10) nach Anspruch 1, **dadurch gekennzeichnet, dass** die Verriegelungseinrichtung (26) zumindest ein Sperrelement (24) aufweist, dass zwischen einer verriegelten Stellung, in der es mit der zumindest einen Bremsbacke (18) in Eingriff ist, und einer entriegelten Stellung bewegbar ist, in der es von der Bremsbacke (18) entkoppelt ist.

3. Notbremssystem (10) nach Anspruch 1, oder 2, **dadurch gekennzeichnet, dass** die Verriegelungseinrichtung (26) einen Aktuator (28) aufweist, insbesondere einen elektromagnetischer Aktuator aufweist, der die Verriegelungseinrichtung (26) aus der verriegelten Stellung in die entriegelte Stellung überführt.

4. Notbremssystem (10) nach Anspruch 3, **dadurch gekennzeichnet, dass** das Diagnosesystem (90) Diagnosemittel (96,98,102) besitzt, die es ermöglichen, die Funktionsfähigkeit des Aktuators 28 und /oder die Funktionsfähigkeit eines Sperrelementes (24) der Verriegelungseinrichtung (26) zu prüfen.

5. Notbremssystem (10) nach Anspruch 4, **dadurch gekennzeichnet, dass** die Diagnosemittel (96,98,102) des Diagnosesystems (90) einen Diagnosestrom (98) umfassen, mit dem der Aktuator (28) der Verriegelungseinrichtung (26) beaufschlagt wird.

6. Notbremssystem (10) nach Anspruch 5, **dadurch gekennzeichnet, dass** der Diagnosestrom (98), mit dem der Aktuator (28) der Verriegelungseinrichtung (26) beaufschlagt wird, kleiner ist, als ein Strom, der die Verriegelungseinrichtung (26) lösen würde.

7. Notbremssystem (10) nach Anspruch 5 oder 6, **dadurch gekennzeichnet, dass** über das Diagnosesystem (90) zu Diagnosezwecken eine Kennlinie des beaufschlagten Diagnosestroms (98) gemessen wird und mit in einem Speicher (100) des Diagnosesystems (90) abgelegten Kenndaten verglichen wird.

8. Notbremssystem (10) nach Anspruch 7, **dadurch gekennzeichnet, dass** eine zeitaufgelöste Kennlinie des beaufschlagten Diagnosestroms (98) gemessen und ausgewertet wird.

9. Notbremssystem (10) nach Anspruch 5, **dadurch gekennzeichnet, dass** ein sich im Aktuator (28) aufgrund des Diagnosestroms (98) aufbauendes Magnetfeld (Diagnosemagnetfeld) gemessen und ausgewertet wird.

10. Notbremssystem (10) nach Anspruch 9, **dadurch gekennzeichnet, dass** das Diagnosemagnetfeld zeitaufgelöst gemessen wird.

11. Werkzeugmaschine mit einem Notbremssystem (10) nach einem der vorhergehenden Ansprüche.

12. Werkzeugmaschine nach Anspruch 11, **dadurch gekennzeichnet, dass** die Werkzeugmaschine eine Säge, vorzugsweise eine Kreissäge und insbesondere eine Tischkreissäge (48) ist.

13. Verfahren zum Betreiben einer Werkzeugmaschine mit einem Notbremssystem (10) zum abrupten Abbremsen einer umlaufenden Welle (16), umfassend zumindest eine Bremstrommel (12) und zumindest eine Bremsbacke (18), die zum Abbremsen der Welle (16), miteinander in Eingriff gebracht werden, wobei der Bremseingriff zwischen der Bremstrommel (12) und der Bremsbacke (18) unter dem Einfluss einer aus der Rotation einer Welle (16) resultierenden Fliehkraft erfolgt, wenn eine Verriegelungseinrichtung (26) gelöst wird, **dadurch gekennzeichnet**, das über Diagnosemittel (98, 102) eines Diagnosesystem (90) die Funktionsfähigkeit der Verriegelungseinrichtung (26) geprüft wird.

14. Verfahren nach Anspruch 13, **dadurch gekennzeichnet, dass** die Diagnose des Notbremssystems (10) in definierten Zeitabständen wiederholt wird.

15. Verfahren nach Anspruch 13 oder 14, **dadurch gekennzeichnet, dass** eine Bestromung des Motors (60) der Werkzeugmaschine in Abhängigkeit eines Signals des Diagnosesystems (90) erfolgt.

**Claims**

1. Emergency brake system (10) for a machine tool, for abruptly braking a rotating shaft (16), comprising at least one brake drum (12) and at least one brake block (18), which are brought into engagement with one another in order to brake the shaft (16) when a locking device (26) is released, **characterized by** the presence of a diagnostic system (90) which has diagnostic means (96, 98, 102) which allow it to check the functionality of the locking device (26).

2. Emergency brake system (10) according to Claim 1, **characterized in that** the locking device (26) has at least one blocking element (24) which is movable between a locked position, in which it is in engagement with the at least one brake block (18), and an unlocked position, in which it is uncoupled from the brake block (18).

3. Emergency brake system (10) according to Claim 1 or 2, **characterized in that** the locking device (26) has an actuator (28), in particular an electromagnetic actuator, which transfers the locking device (26) from the locked position into the unlocked position.

4. Emergency brake system (10) according to Claim 3, **characterized in that** the diagnostic system (90) has diagnostic means (96, 98, 102) which allow it to check the functionality of the actuator (28) and/or the functionality of a blocking element (24) of the locking device (26).

5. Emergency brake system (10) according to Claim 4, **characterized in that** the diagnostic means (96, 98, 102) of the diagnostic system (98) comprise a diagnostic current (98) which is applied to the actuator (28) of the locking device (26).

6. Emergency brake system (10) according to Claim 5, **characterized in that** the diagnostic current (98) which is applied to the actuator (28) of the locking device (26) is smaller than a current which would release the locking device (26).

7. Emergency brake system (10) according to Claim 5 or 6, **characterized in that** a characteristic curve of the applied diagnostic current (98) is measured for diagnostic purposes via the diagnostic system (90) and is compared with characteristic data stored in a memory (100) of the diagnostic system (90).

8. Emergency brake system (10) according to Claim 7, **characterized in that** a time-resolved characteristic curve of the applied diagnostic current (98) is measured and evaluated.

9. Emergency brake system (10) according to Claim 5, **characterized in that** a magnetic field (diagnostic magnetic field) that builds up in the actuator (28) on account of the diagnostic current (98) is measured and evaluated.

10. Emergency brake system (10) according to Claim 9, **characterized in that** the diagnostic magnetic field is measured in a time-resolved manner.

11. Machine tool having an emergency brake system (10) according to one of the preceding claims.

12. Machine tool according to Claim 11, **characterized in that** the machine tool is a saw, preferably a circular saw and in particular a circular saw bench (48).

13. Method for operating a machine tool having an emergency brake system (10) for abruptly braking a rotating shaft (16), comprising at least one brake drum (12) and at least one brake block (18), which are brought into engagement with one another in order to brake the shaft (16), wherein the braking engagement between the brake drum (12) and the brake block (18) occurs under the influence of a centrifugal force that results from the rotation of a shaft (16) when a locking device (26) is released, **characterized in that** the functionality of the locking device (26) is checked via diagnostic means (98, 102) of a diagnostic system (90).

14. Method according to Claim 13, **characterized in that** the diagnostic analysis of the emergency brake system (10) is repeated at defined time intervals.

15. Method according to Claim 13 or 14, **characterized in that** the motor (60) of the machine tool is energized depending on a signal from the diagnostic system (90).

## Revendications

1. Système de freinage d'urgence (10) pour une machine-outil, pour le freinage abrupt d'un arbre en rotation (16), comprenant au moins un tambour de frein (12) et au moins une mâchoire de frein (18), qui sont amenés en prise l'un avec l'autre pour le freinage de l'arbre (16) lorsqu'un dispositif de verrouillage (26) est libéré, **caractérisé en ce qu'**un système de diagnostic (90) est prévu, lequel possède des moyens de diagnostic (96, 98, 102), qui permettent de contrôler le bon fonctionnement du dispositif de verrouillage (26).

2. Système de freinage d'urgence (10) selon la revendication 1, **caractérisé en ce que** le dispositif de verrouillage (26) présente au moins un élément de blocage (24), qui peut être déplacé entre une position verrouillée, dans laquelle il est en prise avec l'au moins une mâchoire de frein (18), et une position déverrouillée, dans laquelle il est désaccouplé de la mâchoire de frein (18).

3. Système de freinage d'urgence (10) selon la revendication 1 ou 2, **caractérisé en ce que** le dispositif de verrouillage (26) présente un actionneur (28), en particulier un actionneur électromagnétique, qui fait passer le dispositif de verrouillage (26) de la position verrouillée dans la position déverrouillée.

4. Système de freinage d'urgence (10) selon la revendication 3, **caractérisé en ce que** le système de diagnostic (90) possède des moyens de diagnostic (96, 98, 102) qui permettent de contrôler le bon fonctionnement de l'actionneur (28) et/ou le bon fonctionnement d'un élément de blocage (24) du dispositif de verrouillage (26).

5. Système de freinage d'urgence (10) selon la revendication 4, **caractérisé en ce que** les moyens de diagnostic (96, 98, 102) du système de diagnostic (90) comprennent un courant de diagnostic (98) avec lequel l'actionneur (28) du dispositif de verrouillage (26) est sollicité.

6. Système de freinage d'urgence (10) selon la revendication 5, **caractérisé en ce que** le courant de diagnostic (98) avec lequel l'actionneur (28) du dispositif de verrouillage (26) est sollicité est inférieur à un courant qui libérerait le dispositif de verrouillage (26).

7. Système de freinage d'urgence (10) selon la revendication 5 ou 6, **caractérisé en ce que** le système de diagnostic (90) permet de mesurer, à des fins de diagnostic, une courbe caractéristique du courant de diagnostic de sollicitation (98), et cette courbe caractéristique est comparée à des données caractéristiques stockées dans une mémoire (100) du système de diagnostic (90).

8. Système de freinage d'urgence (10) selon la revendication 7, **caractérisé en ce qu'**une courbe caractéristique en fonction du temps du courant de diagnostic de sollicitation (98) est mesurée et analysée.

9. Système de freinage d'urgence (10) selon la revendication 5, **caractérisé en ce qu'**un champ magnétique (champ magnétique de diagnostic) se créant dans l'actionneur (28) du fait du courant de diagnostic (98) est mesuré et analysé.

10. Système de freinage d'urgence (10) selon la revendication 9, **caractérisé en ce que** le champ magnétique de diagnostic est mesuré en fonction du temps.

11. Machine-outil comprenant un système de freinage d'urgence (10) selon l'une quelconque des revendications précédentes.

12. Machine-outil selon la revendication 11, **caractérisée en ce que** la machine-outil est une scie, de préférence une scie circulaire et en particulier une scie circulaire à table de menuisier (48).

13. Procédé pour faire fonctionner une machine-outil avec un système de freinage d'urgence (10) pour le freinage abrupt d'un arbre en rotation (16), comprenant au moins un tambour de frein (12) et au moins une mâchoire de frein (18), qui sont amenés en prise l'un avec l'autre pour le freinage de l'arbre (16), l'engagement de freinage entre le tambour de frein (12) et la mâchoire de frein (18) s'effectuant sous l'influence d'une force centrifuge résultant de la rotation d'un arbre (16) lorsqu'un dispositif de verrouillage (26) est libéré, **caractérisé en ce que** le bon fonctionnement du dispositif de verrouillage (26) est contrôlé par le biais de moyens de diagnostic (98, 102) d'un système de diagnostic (90).

14. Procédé selon la revendication 13, **caractérisé en ce que** le diagnostic du système de freinage d'urgence (10) est répété à intervalles de temps définis.

15. Procédé selon la revendication 13 ou 14, **caractérisé en ce que** le moteur (60) de la machine-outil est parcouru par un courant en fonction d'un signal du système de diagnostic (90).

# Fig. 1

# Fig. 2

# Fig. 3

# Fig. 4

**Fig. 5**

**Fig. 6**

## Fig. 7

70, 28

24

27

34

14

29

102

$F_{mag}$

98

90

100

96

# Fig. 8

Fig. 9

Fig. 10

**Fig. 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19536995 A1
- GB 1351546 A
- GB 1536595 A